(19) Europäisches Patentamt
European Patent Office
Office européen des brevets

(11) EP 1 634 909 B1

(12) **EUROPÄISCHE PATENTSCHRIFT**

(45) Veröffentlichungstag und Bekanntmachung des Hinweises auf die Patenterteilung:
**07.05.2008 Patentblatt 2008/19**

(51) Int Cl.:
***C08J 3/24*** *(2006.01)* ***C08J 3/28*** *(2006.01)*
***C09J 133/00*** *(2006.01)* ***C09J 7/02*** *(2006.01)*

(21) Anmeldenummer: **05107704.8**

(22) Anmeldetag: **23.08.2005**

(54) **Haftklebemasse mit dualem Vernetzungsmechanismus**

Dual cure type pressure sensitive adhesive

Réticulation de matières auto-adhésives par durcissement double

(84) Benannte Vertragsstaaten:
**DE ES FR GB IT**

(30) Priorität: **09.09.2004 DE 102004044085**

(43) Veröffentlichungstag der Anmeldung:
**15.03.2006 Patentblatt 2006/11**

(73) Patentinhaber: **tesa AG**
**20253 Hamburg (DE)**

(72) Erfinder:
- **Husemann, Marc Dr.**
**22605, Hamburg (DE)**
- **Zöllner, Stephan Dr.**
**21244 Buchholz/Nordheide (DE)**
- **Hansen, Sven**
**22765 Hamburg (DE)**
- **Brandes, Kay**
**21259 Otter (DE)**

(74) Vertreter: **Stubbe, Andreas**
**tesa AG**
**Quickbornstrasse 24**
**20253 Hamburg (DE)**

(56) Entgegenhaltungen:
**EP-A- 1 300 427** **WO-A-03/046030**
**WO-A-20/05059052** **US-A1- 2001 012 551**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 634 909 B1

## Beschreibung

Die Erfindung betrifft ein Verfahren zur Herstellung von Haftklebebändern, wobei ein Acylatschmelzhaftkleber aus der Schmelze auf einen Träger beschichtet wird und anschließend vernetzt wird.

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von anwachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließender effizienter Vernetzung erreicht. Diese sehr scherfesten und polaren Haftklebemassen besitzen aber den Nachteil, daß sie für den Hotmelt-Extrusionsprozeß nicht gut geeignet sind, da durch die hohe Fliessviskosität hohe Anwendungstemperaturen erforderlich und zudem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.

Ein sehr wichtiges Konzept ist die gezielte Einstellung der Molekulargewichtsverteilung zur besseren Verarbeitbarkeit. Bimodale Molekulargewichtsverteilungen unterstützen die leichtere Verarbeitbarkeit, da durch niedermolekulare Anteile die Fließviskosität herabgesetzt wird und durch hochmolekulare Anteile die Scherfestigkeit erhöht wird. Bimodale Molekulargewichtsverteilungen werden zumeist durch gezieltes Blending hergestellt.

In den Patenten US 4,619,979 und US 4,843,134 ist ein Herstellungsverfahren zur lösemittelfreien Polymerisation von Acrylaten beschrieben. Hier wurden in einem bestimmten Polymerisationsreaktor hochverzweigte Polymere hergestellt. Diese besitzen in der Regel ebenfalls eine reduzierte Fließviskosität gegenüber analogen linearen Polymeren.

Ein weiterer Nachteil bestehender Acrylatschmelzhaftkleber ist weiterhin der eingeschränkte Vernetzungsmechanismus, da diese - im Vergleich zu bestehenden Lösungsmittelsystemen - in der Regel nicht thermisch vernetzt werden können, da diese ansonsten bereits im Verarbeitungsprozess vor der Beschichtung vergelen würden.

Aufgabe der vorliegenden Erfindung ist es, die im Stand der Technik bestehenden Nachteile zu vermeiden und für einen Polyacrylat-Formkörper, insbesondere für Acrylathaftkleber, ein Vernetzungssystem zur Verfügung zu stellen, dass eine Verarbeitbarkeit aus der Schmelze zulässt und durch das durch einen effizienten Vernetzungsmechanismus eine Haftklebemasse mit einer hohen Scherfestigkeit zugänglich ist.

Gelöst wird die Aufgabe überraschend und für den Fachmann in nicht vorhersehbarer Weise durch ein Verfahren, wie es im Hauptanspruch dargelegt ist, also mit speziell modifizierten Polyacrylaten, die aus der Schmelze verarbeitbar und formbar, insbesondere beschichtbar, sind und die nach dem Formvorgang, insbesondere dem Beschichtungsvorgang, zunächst thermisch und anschließend UV-vernetzt werden.

Die Unteransprüche betreffen vorteilhafte Ausführungsformen des erfindungsgemäßen Verfahrens.

Die Erfindung betrifft entsprechend ein Verfahren zur Herstellung von Formkörpern auf Polyacrylatbasis, wobei ein Polyacrylat nach einem an sich bekannten Verfahren polymerisiert wird, dadurch gekennzeichnet, dass
das Polyacrylat einpolymerisierte Comonomere mit thermisch vernetzungsfähigen Gruppen und Comonomere mit gebundenen Photoinitiatoren aufweist, dem Polyacrylat thermische Vernetzer zugesetzt werden, die eine chemische Reaktion mit den vernetzungsfähigen Gruppen des Polyacrylats eingehen können, eine Durchmischung in einem Doppetschneckenexiruder und/oder einem Planetwalzenextruder stattfindet und das Polyacrylat in einem ersten Schritt thermisch und in einem zweiten Schritt durch Bestrahlung mit UV-Licht vernetzt wird.

Insbesondere wird das Polyacrylat nach der Polymerisation auf einen permanenten oder temporären Träger beschichtet, wobei die Vernetzungsschritte nach der Beschichtung, insbesondere auf dem Träger, stattfinden.

Erfindungsgemäß einsetzbare Haftklebemassen

Im Rahmen der Erfindung werden als Haftklebemassen bevorzugt (Meth)Acrylathaftklebemassen eingesetzt, also Haftklebemassen auf Polyacrylat- und/oder Polymethacrylatbasis, d.h. mit einem wesentlichen oder überwiegenden Anteil an Polyacrylaten und/oder Polymethacrylaten und/oder Derivaten der vorstehenden Verbindungen.

Als weitere Comonomere für die Herstellung der Haftklebemassen werden im erfindungsgemäßem Sinne

Monomere mit thermisch vernetzungsfähigen Gruppen sowie solche mit einpolymerisierten Photoinitiatoren eingesetzt.

Die Monomere werden bevorzugt dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des Handbook of Pressure Sensitive Adhesive Technology" von Donatas Satas (van Nostrand, New York 1989, Seite 444 - 514) besitzen.

Die Polymere lassen sich bevorzugt durch Polymerisation einer Monomermischung gewinnen, welche einen hohen bzw. überwiegenden Anteil an Acrylsäureestern und/oder Methacrylsäureestern und/oder deren freien Säuren mit der Formel $CH_2 = C(R_1)(COOR_2)$ besitzen, wobei $R_1$ = H oder $CH_3$ und $R_2$ eine Alkylkette mit 1 - 20 C-Atomen oder H ist.

Das gewichtsmittlere Molekulargewicht $M_w$ der eingesetzten Polyacrylate beträgt bevorzugt $M_w$ < 500.000 g/mol, sehr bevorzugt $M_w$ < 350.000 g/mol.

In einer sehr bevorzugten Weise werden Acryl- oder Methacrylmomonere eingesetzt, die aus Acryl- und Methacrylsäureester mit Alkylgruppen aus 1 bis 14 C-Atomen bestehen, bevorzugt 1 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

Weiterhin geeignete Monomere sind z.B. N,N-Dialkylsubstituierte Amide, wie z.B. N,N-Dimethylacrylamid, N, N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weiterhin sind Bestandteil der im Rahmen dieser Erfindung eingesetzten (Meth)Acrylathaftklebemassen Comonomere mit vernetzungsfähigen Gruppen, wie z.B. Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Bevorzugte Monomere sind hierfür Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, 4-Hydroxylbutylacrylat, 6-Hydroxyhexylmethacrylat, Vinylessigsäure, β-Acryloyloxypropionsäure, Trichloracrylsäure, Fumarsäure, Crotonsäure, Aconitsäure, Dimethylacrylsäure und Acrylsäure, wobei diese Aufzählung nicht abschließend ist.

Weiterer Bestandteil der im Rahmen der Erfindung beschriebenen (Meth)Acrylathaftklebemassen sind Comonomere mit gebundenen Photoinitiatoren. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

Zur Vernetzung mit UV-Licht können den Polyacrylathaftklebemassen auch zusätzlich UV-absorbierende Photoinitiatoren zugemischt werden. Nützliche Photoinitiatoren, welche sehr gut zu verwenden sind, sind Benzoinether, wie z.B. Benzoinmethylether und Benzoinisopropylether, substituierte Acetophenone, wie z.B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Zur Erhöhung der Vernetzungseffizienz der UV-Nachvernetzung können dem Polyacrylat auch multifunktionelle

Acrylate zugesetzt werden. Bevorzugte unter Strahlung vernetzende Substanzen gemäß dem erfinderischen Verfahren sind z.B. bi-, tri- oder tetrafunktionelle Acrylate oder bi- oder multifunktionelle Urethanacrylate. Verwendet werden können hier aber auch alle weiteren, dem Fachmann geläufigen bi- oder multifunktionellen Verbindungen, die in der Lage sind, Polyacrylate strahlenchemisch zu vernetzen.

Zur Weiterentwicklung können den Haftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Poly(meth)acrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Besonders bevorzugt sind solche Klebharze, die eine hohe UV-Transmission im für die Bestrahlung relevanten Wellenlängenbereich haben. Als besonders günstig bei Verwendung von copolymerisiertem Benzoinacrylat als Photoinitiator haben sich hydrierte Kolophoiumester wie Foral 85 und Foral 110 (beide Firma Eastman Chemical) erwiesen. Auf die Darstellung des Wissensstandes im "Handbook of Pressure Sensitive Adhesive Technology" von Donatas Satas (van Nostrand, 1989, Seite 609 - 631 und Seite 515 - 549) sei ausdrücklich hingewiesen.

Weiterhin können optional Weichmacher (Plastifizierungsmittel), weitere Füllstoffe (wie. z.B. Fasern, Zinkoxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln in Konzentrationen zugesetzt sein, die eine UV-Nachvernetzung erlauben.

Ein weiterer Bestandteil der Erfindung ist der Vernetzungsmechanismus nach der Heißschmelz-Beschichtung. In einem ersten Schritt wird die Haftklebemasse thermisch vernetzt. Geeignete Vernetzer werden daher der Klebemasse zukompoundiert. Hier werden Vernetzer eingesetzt, die eine chemische Reaktion mit den funktionellen Comonomeren der (Meth)Acrylathaftklebemasse eingehen. Geeignete Vernetzer sind z.B. bi- oder multifunktionelle Isocyanate (auch in blockierter Form), bi- oder multifunktionelle Epoxide, bi- oder multifunktionelle Hydroxide oder bi- oder multifunktionelle Amine oder Amide. Ein wesentliches Kriterium ist die Zeit zwischen Zudosierung des Vernetzungssystems bis zum optisch homogenen Ausformen auf einen Träger, die als Verarbeitungszeit bezeichnet wird. Die Verarbeitungszeit ist stark abhängig von Prozesstemperatur, Vernetzertyp und -menge, sowie von der Funktionaliserung der Acrylatmasse mit beispielsweise Carboxy- und/oder Hydroxygruppen und gibt den Zeitraum an, in welcher die mit Vernetzer abgemischte Klebmasse mit optisch gutem Strichbild (gelfrei, stippenfrei) beschichtet werden kann. Die Verarbeitungszeit zeigt eine besonders starke Abhängigkeit vom gewichtsmittlerem Molekulargewicht, weshalb Polyacrylate mit Mw < 500.000 bevorzugt erfindungsgemäß verwendet werden.

Die Zugabe und Einarbeitung des thermisch reaktiven Vernetzungssystems in die zu vernetzende lösemittelfreie Polyacrylatmatrix erfolgt bevorzugt in kontinuierlich arbeitenden Compoundierungsaggregaten. Diese Aggregate sind erfindungsgemäß so konzipiert, dass bei guter Durchmischung und gleichzeitig geringem Eintrag von Scherenergie eine kurze Verweilzeit der Masse nach der Dosierung des Vernetzungssystems gewährleistet wird. Die Compoundierungsaggregate sind Doppelschnecken- und/oder Planetwalzenextruder. Dabei ist es besonders vorteilhaft, wenn die Spindeln des Extruders temperierbar und/oder kühlbar sind.

Die Zugabe der Vernetzer erfolgt an einer oder an mehreren Stellen der Aggregate, vorzugsweise in druckfreien Zonen. Günstig ist auch, wenn die thermisch reaktiven Vemetzersubstanzen fein verteilt dem Polyacrylat zugesetzt werden, beispielsweise als Aerosol, in feinen Tröpfchen oder verdünnt in einem geeigneten Verdünnungsmittel wie einem polymerverträglichen Weichmacher. Nach dem Homogenisieren des thermischen Vernetzers wird die Masse zu einer Beschichtungseinheit gefördert und auf einen Träger übertragen, bevorzugt mittels 2-Walzen- oder Düsenbeschichtung. Die Zeit nach Zudosierung des Vernetzungssystems im Compoundieraggregat bis zum Ausformen auf einen Träger wird als Verarbeitungszeit bezeichnet. Innerhalb dieser Zeit kann die nun vernetzende Haftklebmasse gelfrei und mit optisch gutem Strichbild beschichtet werden. Die thermische Vernetzung erfolgt dann hauptsächlich nach der Beschichtung auf der Bahn und kann durch Wärmeeintrag beschleunigt werden. Hierfür eignen sich nachgeschaltete IR-Strahler. Bei besonders reaktiven Vernetzungssystemen ist dies jedoch nicht erforderlich. So reagieren Polyacrylate, die primäre Hydroxylgruppen als vernetzende Gruppen eingebaut haben, auch bei Raumtemperatur mit aliphatischen und aromatischen Isocyanaten, wobei die Verwendung trimerisierter Isocyanate besonders bevorzugt ist.

Ein weiterer Bestandteil der Erfindung ist die nachfolgende Vernetzung mit aktinischer Strahlung, insbesondere UV-Bestrahlung. Dabei wird die ausgeformte und thermisch vorver netzte Schicht durch UV-Bestrahlung nachvernetzt. Dadurch ergeben sich Haftklebemassen mit besonders hoher Scherfestigkeit und langer Verarbeitungszeit (gelfreie Zeit).

Herstellverfahren für die Haftklebebänder

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989, Seite 444 - 514) besitzen.

Zur Erzielung einer bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die Polymerisation der Haftklebemasse erfolgt nach an sich bekannten Polymerisationsverfahren. Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet. Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cydohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. Du-Pont) oder Azodisobutyronitril (AIBN) verwendet.

Die gewichtsmittleren Molekulargewichte $M_w$ der bei der radikalischen Polymerisation entstehenden Haftklebemassen werden sehr bevorzugt derart gewählt, dass sie in einem Bereich von $M_w$ < 500.000 g/mol liegen. Es kann notwendig sein, die Polymerisation in Gegenwart von Polymerisationsreglem wie Thiolen, Halogenverbindungen und insbesondere Alkoholen (Isopropanol) durchzuführen, um das gewünschte gewichtsmittlere Molekulargewicht $M_w$ einzustellen. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethytester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die Acrylathaftklebemassen in Substanz zu polymerisieren. Hier eignet sich insbesondere die Präpolymerisationstechnik.

Die Polymerisation wird mit UV-Licht iniitiert, aber nur zu einem geringen Umsatz von ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert werden. Diese Pellets lassen sich dann als Acrylat-schmelzkleber einsetzen, wobei für den Aufschmelzvorgang besonders bevorzugt Folien-materialien eingesetzt werden, die mit dem Polyacrylat kompatibel sind.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L(A)$-Me repräsentiert, wobei Me ein Metall der Gruppe I, wie z.B. Lithium, Natrium oder Kalium, und $P_L(A)$ ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Für das erfindungsgemäße Verfahren besonders geeignet sind auch Polyacrylate, die eine enge Molekulargewichtsverteilung (Polydispersität < 4) haben. Diese Massen sind bei relativ niedrigem Molekulargewicht nach dem Vernetzen besonders scherfest. Da im Vergleich zu einem normal verteilten Polyacrylat bei einem eng verteilten bei gleichem Kohäsionsniveau ein niedrigeres Molekulargewicht erforderlich ist, reduzieren sich Viskosität und Prozesstemperaturen. Somit ermöglicht ein eng verteiltes Polyacrylat eine besonders lange Verarbeitungszeit.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

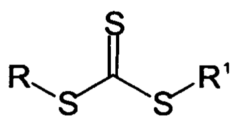

(I)

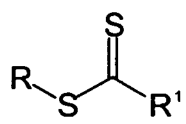

(II)

worin R und $R^1$ unabhängig voneinander gewählt oder gleich sind

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero- Alkylreste mit mindestens einem O- Atom und/ oder einer NR*- Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.
Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.
Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder Trimethylcyclohexyl.
Als $C_6$-$C_{18}$-Arylreste dienen beispielsweise Phenyl, Naphthyl, Benzyl, 4-tert.-Butylbenzyl- oder weitere substituierte Phenyl, wie z.B. Ethylbenzol, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.
Weiterhin sind auch Verbindungen der folgenden Typen als Kontrollreagenzien einsetzbar

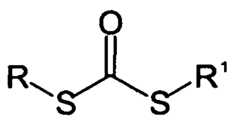

(III)

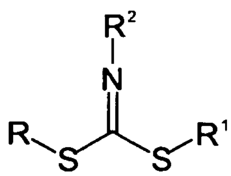

(IV)

wobei $R^2$ ebenfalls unabhängig von R und $R^1$ aus der oben aufgeführten Gruppe für diese Reste gewählt werden kann.
Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.
Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

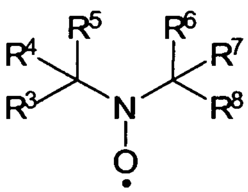

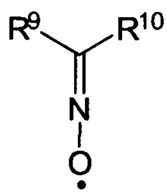

(Va) (Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder lod
ii) lineare, verzweigte, cydische und heterocyclische Kohlenwasserstoffe mit 1 bis 20 Kohlenstoffatomen, die gesättigt, ungesättigt oder aromatisch sein können,
iii) Ester -$COOR^{11}$, Alkoxide -$OR^{12}$ und/oder Phosphonate -$PO(OR^{13})_2$,

wobei $R^{11}$, $R^{12}$ oder $R^{13}$ für Reste aus der Gruppe ii) stehen.

Verbindungen der Struktur (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert-Butyl-1-phenyl-2-methyl propyl Nitroxid
- N-tert.-Butyl-1-(2-naphtyl)-2-methyl propyl Nitroxid
- N-tert-Butyl-1-diethylphosphono-2,2-dimethyl propyl Nitroxid
- N-tert-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Beschichtungsverfahren, Ausrüstung des Trägermaterials mit der Haftklebemasse

Zur Herstellung der Haftklebebänder werden die oben beschriebenen Haftschmelzkleber als Hotmelt-Systeme (also aus der Schmelze) beschichtet. Für das Herstellungsverfahren kann es daher in einem ersten Schritt erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

Zur Beschichtung als Hotmelt können unterschiedliche Beschichtungsverfahren herangezogen werden. In einer Ausführung werden die Schmelzhaftkleber über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989, S. 896 ff und Seite 515 - 541) beschrieben. In einer weiteren Ausführung wird über eine Schmelzdüse beschichtet. Hier kann zwischen dem Kontakt und dem kontaktlosen Verfahren unterschieden werden. Der Schmelzfilm wird durch das Düsendesign innerhalb der Beschichtungsdüse erzeugt. Durch einen Reckprozess nach dem Düsenaustritt kann eine Orientierung der Polymerketten erreicht werden. Das Reckverhältnis kann z.B. durch die Breite des Düsenspaltes gesteuert werden. Eine Reckung tritt immer dann auf, wenn die Schichtdicke des Haftklebefilms auf dem zu beschichtenden Trägermaterial geringer ist als die Breite des Düsenspaltes.

In einem weiteren bevorzugten Verfahren wird durch eine Extrusionsdüse beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Form der Extrusionsdüse kann ebenfalls eine Orientierung innerhalb des Schmelzhaftklebers erzeugt werden. Weiterhin kann hier - in Analogie zur Schmelzdüsenbeschichtung - ebenfalls eine Orientierung nach dem Düsenaustritt durch Reckung des Haftklebebandfilmes erzielt werden.

Die (Meth)Acrylatschmelzkleber werden auf ein geeignetes Trägermaterial beschichtet, um auf diesem Wege ein ein- oder doppelseitiges Haftklebeband herzustellen.
In einer Ausführung werden Transfer-Tapes hergestellt. Als Trägermaterial eignen sich z.B. alle silikonisierten oder fluorierten Folien mit einer Releasewirkung. Als Folienmaterialien seien hier nur beispielhaft BOPP, MOPP, PET, PEN, Polyimid, PVC, PUR, PE, PE/EVA, EPDM, PP und PE genannt. Weiterhin lassen sich für Transfertapes auch Trennpapiere (Glassine Papiere, Kraft Papiere, polyolefinisch beschichtete Papiere) einsetzen.
Für den Fall, dass das Trägermaterial in der Haftklebemasse verbleibt (z.B. in Form einer Trägerfolie), wird bevorzugt eine Trägerfolie oder ein Trägervlies eingesetzt.

Es lassen sich z.B. Folien einsetzen, die Bornitril, Aluminiumoxid oder Siliciumnitril enthalten. Es können aber auch Metallfolien eingesetzt werden. Besonders bevorzugte Folien bestehen aus Aluminium, Kupfer, Edelstahl, Metalllegierungen, etc.). Als Folien-materialien lassen sich weiterhin BOPP, MOPP, PET, PEN, Polyimid, PVC, PUR, PE, PE/EVA, EPDM, PP und PE einsetzen. Weiterhin lassen sich als Trägermaterialien aber auch Vliese (PP, PET) oder Papiervliese oder andere Gewebematerialien einsetzen.

Nach der Beschichtung werden die Haftklebemassen zunächst thermisch vernetzt. Hierfür kann Wärme eingebracht werden durch z.B. Infrarotstrahler, einem Wärmekanal oder einem schlaufenförmigen Kanal um die Verweilzeit zu erhöhen. Weiterhin kann gegebenenfalls das ballenförmige Material in einem Trockenraum nachgetempert werden. In einer bevorzugten Auslegung wird das Haftklebeband auf mindestens 60 °C, mehr bevorzugt auf 80 °C, sehr bevorzugt auf über 100 °C aufgeheizt. Weiterhin ist für den Grad der Vernetzung die Aufenthaltsdauer in dem Temperaturbereich. In einer bevorzugten Auslegung sollte die Temperierzeit mindestens 15 s, mehr bevorzugt 30 s, äußerst bevorzugt größer 1 Minute betragen. Wenn keine Temperung erfolgen soll, kann das ballenförmige Material auch - je nach Anteil und Reaktivität des thermischen Vernetzers - 2 - 10 Tage bei Raumtemperatur gelagert werden.

Für die Durchführung des Dualen Vernetzungsmechanismus wird anschließend die Haftklebemasse mit UV-Licht vernetzt.
Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und dem Maßes der Orientierung angepasst. Weiterhin kann bei gegebener Strahlerleistung die Anzahl der UV-Strahler variiert werden und die Prozessgeschwindigkeit variiert werden.

Beispiele

Die Erfindung wird im Folgenden durch Beispiele und Experimente näher erläutert. Testmethoden:

Feststoffgehalt (Test A):

Der Feststoffgehalt ist ein Maß für den Anteil an nicht Verdampfbaren in einer Polymerlösung. Er wird gravimetrisch bestimmt, indem man die Lösung einwiegt, dann für 2 Stunden bei 120°C im Trockenschrank die verdampfbaren Anteile abdampft und den Rückstand zurückwiegt.

K-Wert (nach FIKENTSCHER) (Test B):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normieeung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Test C):

Die Bestimmung des mittleren Molekulargewichtes MW und der Polydisperistät PD erfolgte durch die Firma Polymer Standards Service in Mainz. Als Eluent wurde THF mit 0.1 Vol.% Trifluoressigsäure eingesetzt. Die Messung erfolgte bei 25°C. Als Vorsäule wurde PSS-SDV, 5 μ, $10^3$ Å, ID 8.0 mm x 50 mm verwendet. Zur Auftrennung wurden die Säulen PSS-SDV, 5 μ, $10^3$ sowie $10^5$ und $10^6$ mit jeweils ID 8.0 mm x 300 mm eingesetzt. Die Probenkonzentration betrug 4 g/l, die Durchflußmenge 1.0 ml pro Minute. Es wurde gegen PMMA-Standards gemessen

Dynamische Fließviskosität (Test D)

Die Messungen wurden mit dem Gerät Dynamic Stress Rheometer von Rheometrics durchgeführt. Zur Probenvorbereitung wurden die flüssigen Polymere auf einen silikonisierten Trennpapierträger aufgetragen und im Trokkenschrank bei 120 °C für 10 Minuten getrocknet. Der Masseauftrag betrug 100 g/ml. Anschließend wurden Streifen geschnitten und diese übereinander laminiert, bis der Verbund eine Dicke von etwa 1 mm aufweist. Aus diesen Laminaten wurden kreisrunde Muster mit einem Durchmesser von 25 mm ausgeschnitten und die rheologischen Messungen mit diesen Laminaten durchgeführt. Bei 100 °C wurde die Frequenz von 0,1 bis 100 rad/s variiert. Zum Vergleich werden die jeweils gemessenen Fließviskositäten bei 10 rad/s angegeben. Es wurde mit paralleler Plattenanordnung gemessen.

Bestimmung des Gelanteils (Test E)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

180° Klebkrafttest (Test F)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Meßergebnisse sind in N/cm angegeben und sind gemittelt aus drei Messungen. Alle Messungen wurden bei Raumtemperatur durchgeführt. Analog wurde die Klebkraft auf Polyethylen (PE) bestimmt.

Scherstandzeit (Test G)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm * 13 mm (Länge * Breite). Anschließend wurde mit 2 kg Anpreßdruck das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen. Die Messung wird bei Normalklima (23°C, 50 % Luftfeuchtigkeit) und bei 70°C in einem Wärmeschrank durchgeführt.

SAFT - Shear Adhesive Failure Temperatur (Test H)

Dieser Test dient der Schnellprüfung der Scherfestigkeit von Klebebändern unter Temperaturbelastung.
Messprobenpräparation: Die Klebebandprobe (auf 50μm PET-Folie beschichtete Haftklebemasse) wird auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13mm x 10mm, die Probe wird senkrecht aufgehängt, überragt am oberen Rand die Stahl-Prüfplatte um 2mm und wird bündig mit einem stabilen Klebestreifen verstärkt, der als Auflage für den Wegmessfühler dient.
Messung: Die zu messende Probe wird am unteren Ende mit einem Gewicht von 50 g belastet. Die Stahl-Prüfplatte mit

der verklebten Probe wird beginnend bei 25 °C mit einer Rate von 9 °C pro Minute auf die Endtemperatur von 200 °C aufgeheizt. Gemessen wird der Rutschweg der Probe mittels Wegmessfühler in Abhängigkeit von Temperatur und Zeit. Der maximale Rutschweg ist auf 1000μm festgelegt, bei überschreiten wird der Test abgebrochen. Prüfklima: Raumtemperatur 23 ± 3 °C, relative Luftfeuchtigkeit 50 ± 5 %.
Positives Testergebnis:

- Rutschweg nach Erreichen der Endtemperatur(200°C) angegeben in μm.
Negatives Testergebnis:
- Temperatur bei Erreichen des maximalen Rutschweges (1000μm) angegeben in °C.
Zur Untersuchung der Proben wurden folgende Testmethoden angewendet:

Herstellung der Ausgangspolymere für die Beispiele 1 bis 4

Im Folgenden wird die Präparation der Ausgangspolymere beschrieben. Die untersuchten Polymere werden konventionell über eine freie radikalische Polymerisation in Lösung hergestellt.

HEMA = Hydroxyethylmethacrylat
AIBN = [2,2'-Azobis(2-methylbutyronitril)]
Perkadox 16 = Bis-(4-t-Butylcyclohexyl)peroxidicarbonat

Polymer 1

Ein für radikalische Polymerisationen konventioneller Reaktor wurde mit 56,25 kg 2-Ethylhexylacrylat, 3,0 kg Acrylsäure, 0,75 kg Benzoinacrylat, 17 kg Siedegrenzbenzin 60/95, 17 kg Aceton und 6 kg Isopropanol befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben und nach 4 h wurde mit 10 kg Aceton/Isopropanol Gemisch (90:10) verdünnt. Nach 5 sowie nach 7 h wurde jeweils mit 90 g Perkadox 16 nachinitiiert. Nach 22 h Reaktionszeit wurde die Polymerisation abgebrochen und auf Raumtemperatur abgekühlt. Das Polyacrylat hat einen K-Wert von 50, einen Feststoffgehalt von 54,6 %, ein mittleres Molekulargewicht von Mw = 405000, Polydispersität (Mw/Mn) = 8,2
Das Polymer wurde nach Trocknung nach Testmethode A, B und C analysiert.

Polymer 2

Analog Beispiel 1 wurden 26,25 kg 2-Ethylhexylacrylat, 30,0 kg n-Butylacrylat, 3,0 kg HEMA, 0,75 kg Benzoinacrylat, 17 kg Siedegrenzbenzin 60/95, 17 kg Aceton und 6 kg Isopropanol polymerisiert. Initiiert wurde zweimal mit jeweils 30 g AIBN, zweimal mit jeweils 90 g Perkadox 16 und verdünnt mit 10 kg Aceton/Isopropanol Gemisch (90:10). Nach 22 h Reaktionszeit wurde die Polymerisation abgebrochen und auf Raumtemperatur abgekühlt. Das Polyacrylat hat einen K-Wert von 56, einen Feststoffgehalt von 54,3 %, ein mittleres Molekulargewicht von Mw = 412000, Polydispersität (Mw/Mn) = 7,8
Das Polymer wurde nach Trocknung nach Testmethode A, B und C analysiert.

Polymer 3

Analog Beispiel 1 wurden 28,65 kg 2-Ethylhexylacrylat, 28,65 kg n-Butylacrylat, 3,0 kg Acrylsäure, 0,6 kg HEMA, 0,30 kg Benzoinacrylat, 15,5 kg Siedegrenzbenzin 60/95, 15,5 kg Aceton und 9 kg Isopropanol polymerisiert. Initiiert wurde zweimal mit jeweils 30 g AIBN, zweimal mit jeweils 90 g Perkadox 16 und verdünnt mit 10 kg Aceton/Isopropanol Gemisch (85:15). Nach 22 h Reaktionszeit wurde die Polymerisation abgebrochen und auf Raumtemperatur abgekühlt. Das Polyacrylat hat einen K-Wert von 46, einen Feststoffgehalt von 54,3 %, ein mittleres Molekulargewicht von Mw = 305000, Polydispersität (Mw/Mn) = 6,8
Das Polymer wurde nach Trocknung nach Testmethode A, B und C analysiert.

Polymer 4

Analog Beispiel 1 wurden 43,5 kg 2-Ethylhexylacrylat, 12,0 kg Methylacrylat, 3,0 kg Acrylsäure, 1,2 kg HEMA, 0,3 kg Benzoinacrylat, 15,5 kg Siedegrenzbenzin 60/95, 15,5 kg Aceton und 9 kg Isopropanol polymerisiert. Initiiert wurde zweimal mit jeweils 30 g AIBN, zweimal mit jeweils 90 g Perkadox 16 und verdünnt mit 10 kg Aceton/Isopropanol

Gemisch (85:15). Nach 22 h Reaktionszeit wurde die Polymerisation abgebrochen und auf Raumtemperatur abgekühlt. Das Polyacrylat hat einen K-Wert von 49, einen Feststoffgehalt von 54,3 %, ein mittleres Molekulargewicht von Mw = 330000, Polydispersität (Mw/Mn) = 6,9
Das Polymer wurde nach Trocknung nach Testmethode A, B und C analysiert.

Polymer 5

Ein für radikalische Polymerisationen konventioneller Reaktor wurde mit 43,5 kg 2-Ethylhexylacrylat, 12,0 kg Methylacrylat, 3,0 kg Acrylsäure, 1,2 kg HEMA, 0,3 kg Benzoinacrylat, 80 g Dithiobenzoesäurebenzylester und 40 kg Aceton befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h wurden erneut 30 g AIBN zugegeben. Nach 5 und nach 7 h erfolgte eine Zugabe von jeweils 90 g Perkadox 16® (Fa. Akzo). Nach 22 h Reaktionszeit wurde die Polymerisation abgebrochen und auf Raumtemperatur abgekühlt.
Das Polyacrylat hat einen K-Wert von 42, einen Feststoffgehalt von 60,2 %, ein mittleres Molekulargewicht von Mw = 302000, Polydispersität (Mw/Mn) = 2,6.
Das Polymer wurde nach Trocknung nach Testmethode A, B und C analysiert.

**Aufkonzentration / Herstellung von Schmelzhaftkleber (Verfahren 1):**

Die durch Polymerisation in Lösung hergestellten Polymere 1 - 5 wurden mittels BERSTORFF-Einschneckenextruder (Aufkonzentrationsextruder) weitestgehend vom Lösemittel befreit. Dazu wurde die Polymerlösung über eine Zahnradpumpe und den Aufkonzentationsextruder gefördert und durch Anlegen von Vakuum an den 3 Domen von den Lösemitteln befreit. Exemplarisch sind hier die Parameter der Aufkonzentration des Polymeren 1 dargestellt. Die Drehzahl der Schnecke betrug 150 U/min, der Motorstrom 10 A, es wurde ein Durchsatz von 65,3 kg flüssig/h realisiert. Die Unterdrücke betrugen jeweils 580 mbar, 60 mbar und 9 mbar, wobei das geringste Vakuum im ersten Dom angelegt wurde. Die Austrittstemperatur des aufkonzentrierten Hotmelts lag bei 90 °C. Der Feststoffgehalt betrug nach diesem Aufkonzentrationsschritt 99,5%.

**Herstellung der erfindungsgemäßen Klebebänder, Abmischung mit dem thermischen Vernetzer, Beschichtung und UV-Vernetzung (Verfahren 2, Beispiele 1 bis 6)**

Die von den Lösemitteln befreiten Acrylatschmelzhaftkleber wurden in einem Fütterextruder (Einschneckenförderextruder der Firma TROESTER) aufgeschmolzen und in einen Doppelschneckenextruder gefördert (Fa. LEISTRITZ, Deutschland, Bez. LSM 30/34). Das Aggregat wird von außen elektrisch beheizt und über verschiedene Gebläse luftgekühlt und ist so konzipiert, dass bei guter Verteilung des Vernetzungssystems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzungssysteme (z.B. Isocyanate) erfolgt mit geeignetem Dosierequipment gegebenenfalls an mehreren Stellen und gegebenenfalls unter Verwendung von Dosierhilfsmitteln in die druckfreien Förderzonen des Doppelschneckenextruders.
Nach Austritt der fertig compoundierten, mit Vernetzer abgemischten Klebmasse aus dem Doppelschneckerextruder erfolgt die Beschichtung direkt mittels nachgeschalteter SIG-Düse auf eine mit Saran-Primer vorbehandelte 23 µm dicke PET-Folie (der Fa. Mitsubishi). Der Masseauftrag bei allen Beispielen beträgt 50 g/m$^2$. Anschließend wurde die Beschichtung durch einen Wärmekanal mit 2 IR-Strahlern geführt. Die Temperatur auf der Bahn betrug 100°C. Die Bahngeschwindigkeit betrug 20 m/min. Zur UV-Härtung wurde eine UV-Anlage der Fa. Eltosch eingesetzt. Die Anlage ist ausgerüstet mit zwei Hg-Mitteldruck UV-Strahlem, die jeweils eine Intensität von 120 W/cm haben. Die zu vernetzenden Haftklebebandmuster wurden mit 20 m/min durch die UV-Anlage gefahren. Zum Vergleich wurden Muster bewertet, die nicht durch UV-Bestrahlung nachvernetzt wurden (siehe Tabelle 2).

In den nachfolgenden Beispielen und in der Tabelle 1 werden die Prozessbedingungen, Dosierverhältnisse und Formulierungen näher erläutert.

Beispiel 1

Das Polymer 1 wurde gemäß Verfahren 1 aufkonzentiert (Feststoffgehalt 99,5%, Viskosität Testmethode D) gemäß Verfahren 2 mit 0,30 Gew.% des trimerisierten aliphatischen Diisocyanates Desmodur XP 2410 (Fa. BAYER AG, Deutschland) abgemischt. Zur Verbesserung der Dosierfähigkeit wurde das trimerisierte Diisocyanat mit dem flüssigen Phophatester REOFOS 65 (Fa. GREAT LAKES, USA) im Verhältnis 1 zu 1 verdünnt. Die Prozessparameter sind

in Tabelle 1 zusammengefasst. Die Verarbeitungszeit des Compounds betrug mehr als 30 Minuten bei einer effektiven Massetemperatur von 82°C nach dem Verlassen des LEISTRITZ-Extruders. Die Beschichtung mit 50 g/$m^2$ Masseauftrag erfolgte mittels einer Extrusionsdüse der Firma SIG auf vorbehandelte PET-Folie. Anschließend wurde durch IR Strahler erwärmt und durch UV-Bestrahlung nachvernetzt. Nach 10 Tagen Lagerung bei 23°C wurden die klebtechnischen Eigenschaften nach Testmethode E, F, G und H bestimmt (Tabelle 2). Im Vergleich mit dem nicht UV-nachvernetzen Referenzmuster erkennt man die deutliche Qualitätsverbesserung. Der Gelanteil steigt an, die Masse ist deutlich besser vernetzt. Die Scherstandzeiten und der SAFT-Test (Testmethode H) sind ebenfalls deutlich verbessert. Auch die Adhäsion ist günstiger, da die Masse jetzt nicht mehr spaltet.

Beispiel 2

Das gemäß Verfahren 1 aufkonzentrierte Basispolymer 2 (Viskosität Testmethode D) wurde analog Beispiel 1 mit Vernetzer abgemischt, beschichtet, erwärmt und nachvernetzt. Zugesetzt wurden 0,40 Gew.% (bezogen auf Acrylatcopolymer) des trimerisierten HDI-Polyisocyanates Desmodur N3600 (BAYER AG, Deutschland) gemäß Verfahren 2. Nach Beschichtung und UV-Bestrahlung gemäß Verfahren 2 wurde das Muster nach 10 Tagen Lagerung bei Raumtemperatur nach Testmethode E, F, G und H analysiert. Zu klebtechnischen Daten siehe Beispiel 2 in Tabelle 2. Die Qualitätsverbesserung durch die UV-Nachvernetzung verhält sich analog Beispiel 1. Die Masse ist allerdings acrylsäurefrei und daher etwas weicher. Überraschend ist, dass die Verklebung einer acrylsäurefreien Masse hinreichend wärmebeständig ist (SAFT Test).

Beispiel 3

Vor Aufkonzentration wurde 20 Gew% Foral 85 in die Lösung des Polymeren 2 eingelöst und nach vollständigem Auflösen des Harzes gemäß Verfahren 1 aufkonzentriert (Viskosität Testmethode D). Anschließend wurden in den harzmodifizierten Acrylatschmelzhaftkleber gemäß Verfahren 2 0,80 Gew.% (bezogen auf das Acrylatcopolymer) Desmodur N3600 eingemischt und wie unter Beispiel 1 beschrieben beschichtet und UV-nachvernetzt. Das Muster nach 10 Tagen Lagerung bei Raumtemperatur nach Testmethode E, F, G und H analysiert. Zu klebtechnischen Daten siehe Beispiel 3 in Tabelle 2. Wie man den Daten entnehmen kann, zeigen auch harzmodifizierte Polyacrylate nach diesem Verfahren sehr gute Werte.

Bespiel 4:

Das gemäß Verfahren 1 aufkonzentrierte Basispolymer 3 (Viskosität Testmethode D) wurde analog Beispiel 1 mit Vernetzer abgemischt, beschichtet, erwärmt und nachvernetzt. Zugesetzt wurden 0,40 Gew.% (bezogen auf Acrylatcopolymer) Desmodur XP2410 (BAYER AG, Deutschland) gemäß Verfahren 2. Nach Beschichtung und UV-Bestrahlung gemäß Verfahren 2 wurde das Muster nach 10 Tagen Lagerung bei Raumtemperatur nach Testmethode E, F, G und H analysiert. Zu klebtechnischen Daten siehe Beispiel 4 in Tabelle 2.

Beispiel 5:

Das gemäß Verfahren 1 aufkonzentrierte Basispolymer 4 (Viskosität Testmethode D) wurde analog Beispiel 1 mit Vernetzer abgemischt, beschichtet, erwärmt und nachvernetzt. Zugesetzt wurden 0,40 Gew.% (bezogen auf Acrylatcopolymer) Desmodur XP2410 (BAYER AG, Deutschland) gemäß Verfahren 2. Nach Beschichtung und UV-Bestrahlung gemäß Verfahren 2 wurde das Muster nach 10 Tagen Lagerung bei Raumtemperatur nach Testmethode E, F, G und H analysiert. Zu klebtechnischen Daten siehe Beispiel 5 in Tabelle 2. Dieses Polyacrylat ist besonders scherfest.

Beispiel 6:

Das gemäß Verfahren 1 aufkonzentrierte Basispolymer 5 (Viskosität Testmethode D) wurde analog Beispiel 1 mit Vernetzer abgemischt, beschichtet, erwärmt und nachvernetzt. Zugesetzt wurden 0,50 Gew.% (bezogen auf Acrylatcopolymer) Desmodur XP2410 (BAYER AG, Deutschland) gemäß Verfahren 2. Nach Beschichtung und UV-Bestrahlung gemäß Verfahren 2 wurde das Muster nach 10 Tagen Lagerung bei Raumtemperatur nach Testmethode E, F, G und H analysiert. Zu klebtechnischen Daten siehe Beispiel 6 in Tabelle 2. Auch mit enger Molekulargewichtsverteilung können nach diesem Verfahren leistungsstarke Acrylathaftklebemassen erhalten werden.

Für alle Beispiele wurden Molekulargewichte von unterhalb 500.000 g/mol bestimmt (Test C). Auf diesem Weg wird eine gute Hotmeltprozeßfähigkeit gewährleistet. Weiterhin ist für die Beschichtung als Hotmelt die dynamische Fließviskosität entscheidend. Daher wurde von allen Beispielen zum Vergleich die Fließviskosität mit dem Rheometer

(Test D) bestimmt. Die Ergebnisse sind in der Tabelle 2 dargestellt. Die gemessenen Fließviskositäten liegen auf einem niedrigen Niveau und deuten darauf hin, dass sich die Acrylatschmelzhaftkleber leicht aus der Schmelze verarbeiten lassen.

Für den Fachmann völlig überraschend ist die ausgezeichnete Beschichtbarkeit der Hotmelt-Klebmasse nach Zugabe und Einmischung des thermischen Vernetzungssystems in die Polyacrylat-Klebmasse bei den im Compoundieraggregat herrschenden Temperaturen zwischen 60 °C und 100 °C, vorzugsweise zwischen 70 °C und 80 °C. Unter Beschichtbarkeit wird in diesem Zusammenhang die Eignung zum Ausformen der mit Vernetzer abgemischten Klebmasse in dünne Schichten und zum Aufbringen auf ein bahnförmiges Trägermaterial mittels Beschichtungsdüse oder Walzenbeschichtungswerk verstanden. Zu erwarten war eine Vernetzung bzw. Vergelung der Klebmasse, so dass eine nachfolgende Beschichtung nicht mehr möglich gewesen wäre. Tatsächlich können die beschriebenen Klebmassen aber innerhalb eines gewissen Zeitraumes nach der Vemetzerdosierung und Compoundierung beschichtet werden. Die Verarbeitungszeit ist stark abhängig von Molekulargewicht und der Funktionalisierung der Polyacrylat-Klebmasse, sowie von Typ und Menge des verwendeten Vernetzungssystems und den herrschenden Prozessbedingungen wie z.B. Massetemperatur und geometrische Beschaffenheit des Compoundieraggregats.

Durch diese duale Vernetzung ist es möglich den Vorteil der guten Beschichtbarkeit und Verankerungsfähigkeit auf Trägermaterialen einer Masse mit niedrigem gewichtsmittlerem Molekulargewicht zu nutzen und den zu erwartenden Nachteil der deutlich eingeschränkten klebtechnischen Eigenschaften derartiger Massen zu überwinden. Wie den Daten der Tabelle 2 zu entnehmen ist, lassen sich mit diesem Verfahren, dem Dualen Vernetzungsmechanismus, thermische Vernetzung eines Acrylatschmelzhaftklebers gefolgt von einer strahlenchemischen Nachvemetzung, bevorzugt UV-Vernetzung, sehr leistungsstarke Klebmassen herstellen. Die Adhäsionswerte sind insbesondere bei harzmodifizierten Massen sehr gut. Besonders überraschend ist jedoch die Kohäsion - gemessen durch die Scherstandzeiten bei 23 und 70°C. Für den Fachmann überraschend gut ist die Wärmebeständigkeit gemessen durch den SAFT Test. In jedem Fall ist die Verklebung bis zu einer Temperatur von 200°C stabil. Dies war mit Polyacrylaten, die ein niedriges mittleres Molekulargewicht ausweisen, nicht zu erwarten. Das niedrige mittlere Molekulargewicht ermöglicht eine gute Verarbeitungsfähigkeit in Extrusionsprozess. Die Schmelzeviskosität und die Verarbeitungstemperatur sind relativ gering, dies erleichtert die Einarbeitung thermischer Vernetzer in die Schmelze - obwohl diese nicht zu erwarten gewesen war. Allerdings gelingt erst durch die nachfolgende UV-Vernetzung eine signifikante Qualitätsverbesserung der klebtechnischen Eigenschaften.

**Tabelle 1: Die wichtigsten Parameter der Einarbeitung des Vernetzers in den AC-Schmelzhaftkleber nach Verfahren 2, Musterherstellung**

| Beispiel | Basispolymer | | Klebharz | Vernetzereinarbeitung, Beschichtung, Nachvernetzung nach Verfahren 2 (50 g/m² Masse auf 23µm vorbehandelte PET Folie, 2 IR Strahler (100°C auf der Bahn, 20m/min), 2 UV-Strahler (Hg-Mitteldruck, je 120W/cm, 20m/min)) | | | | | | | | | |
|---|---|---|---|---|---|---|---|---|---|---|---|---|---|
| | Polymer | K-Wert (Test B) | Anteil [Gew.%] | Schmelzviskosität der Masse bei 10 rad/s und 100'C η [Pa s] (Test D) | Vernetzer [% bezogen auf Polymer] | Massedurchsatz DSE [kg/h] | Drehzahl DSE [1/min] | Solltemperatur DSE [°C] | Stromaufnahme DSE [A] | Druck Ausgang DSE [bar] | Massetemperatur nach DSE [°C] | Temperatur Beschichtung-düse [°C] | Gelfreie Zeit* [min] |
| **B 1** | P 1 | 50 | - | 217 | 0,30% Desmodur XP2410 | 15,0 | 50 | 70 | 9,7 | 9,2 | 82 | 80 | 25 |
| **B 2** | P 2 | 56 | - | 280 | 0,40% Desmodur N3600 | 13,0 | 50 | 70 | 11,2 | 9,9 | 85 | 80 | > 30 |
| **B 3** | P 2 | 56 | 20 % Foral 85 | 183 | 0,80% Desmodur N3600 | 14,5 | 100 | 60 | 9,7 | 8,8 | 73 | 70 | > 30 |
| **B 4** | P 3 | 46 | - | 167 | 0,40% Desmodur XP2410 | 12.4 | 50 | 70 | 12,5 | 10,2 | 76 | 80 | > 30 |
| **B 4** | P 4 | 49 | - | 187 | 0,40% Desmodur XP2410 | 12,5 | 50 | 70 | 13,1 | 11,5 | 79 | 80 | 20 |
| **B 6** | P 5 | 42 | - | 120 | 0,50% Desmodur XP2410 | 12,0 | 70 | 60 | 10,2 | 9,3 | 68 | 70 | 30 |

DSE = Doppelschneckenextruder; *Verarbeitungszeit

**Tabelle 2: Die wichtigsten klebtechnischen Eigenschaften der Beispiele 1 - 6**

| Muster jeweils 50g/m² Masse auf 23µm PET-Folie | | | | | | | | | | |
|---|---|---|---|---|---|---|---|---|---|---|
| **Beispiel** | **Zusammensetzung** | | | **UV-Bestrahlung (Verfahren 2)** | **Gelwert [%, bezogen auf Polymer] (Test E)** | **Klebkraft Stahl [N/cm] (Test F)** | **Klebkraft PE [N/cm] (Test F)** | **Scherstandzeit 10N 23°C [min] (Test G)** | **Scherstandzeit 10 N 70°C [min] (Test G)** | **SAFT Test (Test H)** |
| **B 1 ohne UV** | P 1 | - | 0,30% Desmodur XP2410 | ohne | 24 | 7,2 (K) | 2,7 (K) | 120 (K) | 5 (K) | 1000 µm (120°C) |
| **B 1** | P 1 | - | 0,30% Desmodur XP2410 | 2 x 120W/cm | 75 | 5,4 | 1,2 | > 10000 | 55 | 257 µm (200°C) |
| **B 2 ohne UV** | P 2 | - | 0,40% Desmodur N3600 | ohne | 33 | 8,8 (K) | 4,2 (K) | 62 (K) | 2 (K) | 1000 µm (97°C) |
| **B 2** | P 2 | - | 0,40% Desmodur N3600 | 2 x 120W/cm | 77 | 3,6 | 1,8 | 1547 | 27 | 670 µm (200°C) |
| **B 3** | P 2 | 20 % Foral 85 | 0,80% Desmodur N3600 | 2 x 120W/cm | 72 | 4,9 | 2,8 | 1849 | 17 | 850 µm (200°C) |
| **B 4** | P 3 | - | 0,40% Desmodur XP2410 | 2 x 120W/cm | 65 | 5,5 | 1,9 | 3572 | 20 | 425 µm (200°C) |
| **B 5** | P 4 | - | 0,40% Desmodur XP2410 | 2 x 120W/cm | 68 | 4,3 | 1,2 | > 10000 | 556 | 130 µm (200°C) |

(fortgesetzt)

| Muster jeweils 50g/m$^2$ Masse auf 23μm PET-Folie | | | | | | | | | | |
|---|---|---|---|---|---|---|---|---|---|---|
| **Beispiel** | **Zusammensetzung** | | | **UV-Bestrahlung (Verfahren 2)** | **Gelwert [%, bezogen auf Polymer] (Test E)** | **Klebkraft Stahl [N/cm] (Test F)** | **Klebkraft PE [N/cm] (Test F)** | **Scherstandzeit 10N 23°C [min] (Test G)** | **Scherstandzeit 10 N 70°C [min] (Test G)** | **SAFT Test (Test H)** |
| **B 6** | P 5 | - | 0,50 % Desmodur XP2410 | 2 x 120W/cm | 72 | 4,8 | 1,0 | > 10000 | 1245 | 80 μm (200°C) |
| Die Ausprüfungen wurden 10 Tage nach Lagerung bei 23°C, 50% Luftfeuchtigkeit durchgeführt.<br>K = Kohäsionsbruch, Masse spaltet | | | | | | | | | | |

## Patentansprüche

1. Verfahren zur Herstellung von Formkörpern auf Polyacrylatbasis, wobei ein Polyacrylat nach einem an sich bekannten Verfahren polymerisiert wird, **dadurch gekennzeichnet, dass** das Polyacrylat einpolymerisierte Comonomere mit thermisch vernetzungsfähigen Gruppen und Comonomere mit gebundenen Photoinitiatoren aufweist, dem Polyacrylat thermische Vernetzer zugesetzt werden, die eine chemische Reaktion mit den vernetzungsfähigen Gruppen des Polyacrylats eingehen können, eine Durchmischung in einem Doppelschneckenextruder und/oder einem Planetwalzenextruder stattfindet und das Polyacrylat in einem ersten Schritt thermisch und in einem zweiten Schritt durch Bestrahlung mit UV-Licht vernetzt wird.

2. Verfahren nach Anspruch 1, **dadurch gekennzeichnet, dass** der Formkörper zweidimensional flächig ausgedehnt ist.

3. Verfahren nach einem der Ansprüche 1 oder 2, **dadurch gekennzeichnet, dass** das Polyacrylat eine Polyacrylathaftklebemasse ist.

4. Verfahren nach Anspruch 3, **dadurch gekennzeichnet, dass** die Polyacrylathaftklebemasse nach der Polymerisation aus der Schmelze auf einen permanenten oder temporären Träger beschichtet wird und die Vernetzungsschritte nach der Beschichtung stattfinden.

5. Verfahren nach zumindest einem der Ansprüche 3 oder 4, **dadurch gekennzeichnet, dass** die Polyacrylathaftklebemasse vor den Vernetzungsschritten ein gewichtsmittleres Molekulargewicht von nicht mehr als 500.000 g/mol, insbesondere von nicht mehr als 300.000 g/mol aufweist.

6. Verfahren nach zumindest einem der vorangehenden Ansprüche, **dadurch gekennzeichnet, dass** die Polyacrylathaftklebemasse in der Schmelze einen Restlösemittelanteil von nicht mehr als 1 %, besonders von nicht mehr als 0,5 %, ganz besonders von nicht mehr als 0,2 % aufweisen.

## Claims

1. Process for preparing polyacrylate-based shaped articles, a polyacrylate being polymerized by a conventional method, **characterized in that** the polyacrylate comprises copolymerized comonomers having thermally crosslinkable groups and comonomers having attached photoinitiators, thermal crosslinkers which can enter into a chemical reaction with the crosslinkable groups of the polyacrylate are added to the polyacrylate, thorough mixing takes place in a twin-screw extruder and/or a planetary roll extruder and the polyacrylate is crosslinked thermally in a first step and by irradiation with UV light in a second step.

2. Process according to Claim 1, **characterized in that** the shaped article is of two-dimensionally flat extent.

3. Process according to either of Claims 1 and 2, **characterized in that** the polyacrylate is a polyacrylate pressure-sensitive adhesive.

4. Process according to Claim 3, **characterized in that** following polymerization the polyacrylate pressure-sensitive adhesive is coated from the melt onto a permanent or temporary backing and the crosslinking steps take place after the coating operation.

5. Process according to at least one of Claims 3 and 4, **characterized in that** the polyacrylate pressure-sensitive adhesive prior to the crosslinking steps has a weight-average molecular weight of not more than 500 000 g/mol, in particular of not more than 300 000 g/mol.

6. Process according to at least one of the preceding claims, **characterized in that** the polyacrylate pressure-sensitive adhesive in the melt has a residual solvent fraction of not more than 1%, in particular of not more than 0.5%, and very particularly of not more than 0.2%.

## Revendications

**1.** Procédé de production de corps façonnés à base de polyacrylate, dans lequel un polyacrylate est polymérisé selon un procédé connu en soi, **caractérisé en ce que** le polyacrylate présente des comonomères copolymérisés avec des groupes thermiquement réticulables et des comonomères avec des photo-initiateurs liés, des réticulants thermiques sont ajoutés au polyacrylate, qui peuvent entrer en réaction chimique avec les groupes réticulables du polyacrylate, un mélange a lieu dans une extrudeuse à double vis sans fin et/ou une extrudeuse à cylindres planétaire et le polyacrylate est réticulé dans une première étape thermiquement et dans une deuxième étape par irradiation avec de la lumière UV.

**2.** Procédé selon la revendication 1, **caractérisé en ce que** le corps façonné est étendu à plat dans deux dimensions.

**3.** Procédé selon l'une quelconque des revendications 1 ou 2, **caractérisé en ce que** le polyacrylate est une masse autoadhésive à base de polyacrylate.

**4.** Procédé selon la revendication 3, **caractérisé en ce que** la masse autoadhésive à base de polyacrylate est revêtue après la polymérisation à partir de la masse fondue sur un support permanent ou provisoire et les étapes de réticulation ont lieu après le revêtement.

**5.** Procédé selon au moins l'une quelconque des revendications 3 ou 4, **caractérisé en ce que** la masse autoadhésive à base de polyacrylate présente, avant les étapes de réticulation, un poids moléculaire pondéral moyen qui n'est pas supérieur à 500 000 g/mole, en particulier pas supérieur à 300 000 g/mole.

**6.** Procédé selon au moins l'une quelconque des revendications précédentes, **caractérisé en ce que** la masse autoadhésive à base de polyacrylate dans la masse fondue présente une proportion résiduelle de solvant qui n'est pas supérieure à 1%, en particulier pas supérieure à 0,5%, de manière tout particulièrement préférée pas supérieure à 0,2%.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4619979 A
- US 4843134 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- Handbook of Pressure Sensitive Adhesive Technology. van Nostrand, 1989, 444-514
- **FOUASSIER.** Photoinititation, Photopolymerization and Photocuring: Fundamentals and Applications. Hanser-Verlag, 1995
- **CARROY et al.** Chemistry and Technology of UV and EB Formulation for Coatings, Inks and Paints. 1994
- **DONATAS SATAS.** Handbook of Pressure Sensitive Adhesive Technology. van Nostrand, 1989
- **DONATAS SATAS.** Handbook of Pressure Sensitive Adhesive Technology. van Nostrand, 1989, 444-514
- **T.G. FOX.** *Bull. Am. Phys. Soc.,* 1956, vol. 1, 123
- **HOUBEN WEYL.** *Methoden der Organischen Chemie,* vol. 19a, 60-147
- *Macromolecules,* 1995, vol. 28, 7886
- **HAWKER.** *Beitrag zur Hauptversammlung der American Chemical Society,* 1997
- **HUSEMANN.** *Beitrag zum IUPAC World-Polymer Meeting,* 1998